# FASCICULE DE BREVET EUROPEEN

(11) **EP 0 739 793 B1**
(45) Date de publication et mention de la délivrance du brevet: **01.12.1999**
(21) Numéro de dépôt: 96400892.4
(22) Date de dépôt: 25.04.1996
(51) Int. Cl.: B60S 1/04

(54) **Mécanisme d'essuie glace pour véhicule automobile comportant un élément de structure démontable**
Scheibenwischeranlage für ein Kraftfahrzeug mit einem demontierbaren Strukturelement
Windscreen wiper mechanism for a motor vehicle with a demountable structure element

(30) Priorité: 28.04.1995 FR 9505249
(43) Date de publication de la demande: 30.10.1996
(73) Titulaire: VALEO SYSTEMES D'ESSUYAGE, 78321 La Verrière (FR)
(72) Inventeur: Predeau, Serge, 86100 Chatellerault (FR); Morin, Pascal, 86100 Chatellerault (FR)
(74) Mandataire: Kohn, Philippe

(56) Documents cités:
- EP-A- 0 213 250
- DE-A- 4 333 484
- FR-A- 2 667 833
- GB-A- 2 259 246

## Description

L'invention concerne un mécanisme d'essuie-glace pour véhicule automobile, du type comportant au moins un palier qui est prévu pour le guidage en rotation d'un arbre d'entraînement en balayage alterné d'un essuie-glace et qui comporte un moignon transversal sensiblement cylindrique pour la fixation d'un élément de structure du mécanisme.

Un tel type de mécanisme est connu et a été déjà décrit et représenté dans le document FR-A-2 667 833 ou FR-A-2.720.354.

Ce type de mécanisme est notamment utilisé afin de concevoir des modules d'essuyage pour des modèles différents de véhiculé automobile en utilisant des pièces standardisées.

Généralement, la fixation d'un élément de structure, tel qu'une traverse, sur un palier s'effectue en utilisant un moignon transversal cylindrique du palier qui est reçu dans une extrémité tubulaire de la traverse.

La fixation est de plus complétée par une opération de sertissage radial ou de soudage.

Cette conception, si elle permet effectivement de réaliser des modules d'essuyage utilisant des paliers standardisés, nécessite toutefois un assemblage complet du mécanisme d'essuyage avant son implantation dans le véhicule automobile.

Cela est notamment nécessaire du fait que, pour monter le moignon du palier dans la traverse, il faut l'écarter de sa position finale par rapport à la traverse pour pouvoir introduire le moignon à l'intérieur de l'extrémité tubulaire de la traverse.

Or il apparaît que la conception actuelle des véhicules automobiles tend à réduire au minimum la place dévolue aux organes mécaniques pour augmenter l'espace réservé aux passagers.

Ainsi il devient parfois difficile, voire impossible, de monter des ensembles mécaniques complets de grandes dimensions directement sur le véhicule, dans le compartiment moteur.

L'invention a donc pour but de proposer une nouvelle conception de la fixation d'un élément de structure sur un palier qui permet notamment d'effectuer cette fixation après le montage des paliers sur le véhicule automobile.

Dans ce but, l'invention propose un mécanisme du type vu précédemment, caractérisé en ce que l'élément de structure comporte une extrémité de fixation qui présente, en section, un profil en demi-cercle de sorte que l'élément de structure puisse être monté sur le moignon transversal du palier selon une direction radiale après la mise en place du palier sur le véhicule et de sorte que la surface intérieure concave de l'extrémité de fixation soit complémentaire de la surface extérieure convexe du moignon transversal qu'elle vient recouvrir en position montée, et en ce qu'il est prévu des éléments de fixation démontables.

Selon des modes de réalisation de l'invention :
- le moignon transversal du palier et l'extrémité libre de fixation de l'élément de structure sur le moignon présentent des profils complémentaires pour assurer l'accouplement en rotation de ces deux composants ;
- le moignon transversal du palier comporte un méplat supérieur, et l'élément de structure présente, en section, un profil en demi-cercle muni d'un méplat ;
- l'élément de structure est un tube dont l'extrémité de fixation au palier est écrasée radialement ;
- l'extrémité de fixation de l'élément de structure est fixée sur le moignon par des vis radiales dont la tête prend appui sur le méplat de la surface extérieure convexe de l'extrémité de fixation et dont le corps est vissé radialement dans le moignon ;
- le méplat du moignon transversal comporte un ergot orienté radialement et qui est reçu dans une encoche correspondante de l'extrémité de fixation de l'élément de structure pour indexer angulairement l'élément de structure par rapport au palier.

L'invention propose également un mécanisme d'essuie-glace de véhicule automobile, du type comportant une poutre transversale principale sur laquelle est agencée un groupe motoréducteur pour l'entraînement en balayage alterné d'un arbre d'entraînement d'un premier essuie-glace monté à rotation dans un palier central, comportant un premier palier latéral de guidage d'un second arbre d'entraînement d'un second essuie-glace, du type dans lequel les deux paliers servent à la fixation de la poutre transversale, du type comportant un second palier latéral susceptible de recevoir le second arbre d'entraînement et correspondant à une seconde position du second essuie-glace, caractérisé en ce que le second palier latéral est relié au palier central par une traverse de rigidification et en ce que la fixation de la traverse sur au moins l'un des paliers présente l'une quelconque des caractéristiques précédentes.

D'autres caractéristiques et avantages de l'invention apparaîtront à la lecture de la description détaillée qui suit pour la compréhension de laquelle on se reportera aux dessins annexés dans lesquels :
- La figure 1 est une vue en perspective de face d'un mécanisme d'essuyage complet de véhicule automobile prévu pour être adaptable tant sur un véhicule à conduite à gauche que sur un véhicule à conduite à droite ;
- la figure 2 est une vue en perspective éclatée d'un palier et d'un tronçon d'une traverse de rigidification selon l'invention ;
- la figure 3 est une vue en perspective de l'extrémité de fixation d'une traverse selon l'invention ;
- la figure 4 est une vue en section transversale de l'extrémité de fixation de la traverse selon l'invention illustrée sur la figure 3 ;
- la figure 5 est une vue détaillée en perspective de l'assemblage de différents éléments sur un palier selon l'invention.

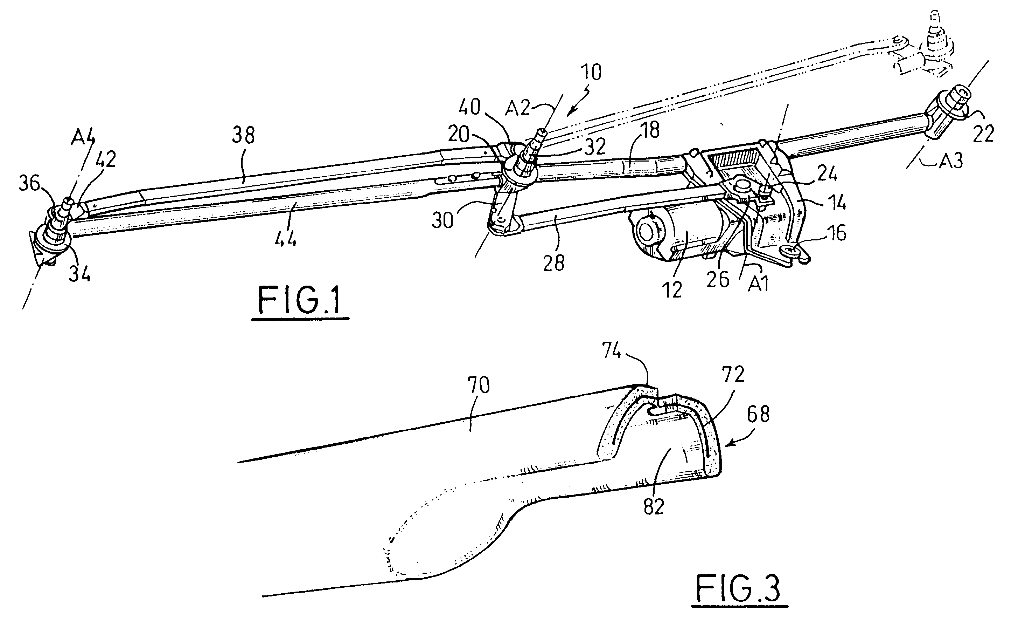

On a représenté sur la figure 1 un mécanisme d'essuyage 10 pour véhicule automobile qui comporte un groupe motoréducteur 12 monté sur un bâti 14. Le bâti 14 est relié à la caisse du véhicule (non représentée) par un point de fixation 16 et prend appui sur une poutre transversale 18.

La poutre transversale 18 est reliée par chacune de ses extrémités à un palier central 20 d'axe A2 et à un palier latéral gauche 22 d'axe A3 (à droite sur la figure 1) qui sont eux-mêmes fixés à la caisse du véhicule, avec leurs axes sensiblement perpendiculaires au plan du pare-brise (non représenté).

Le groupe motoréducteur 12 ici représenté possède un arbre de sortie 24 d'axe A1 sensiblement parallèle aux axes A2 et A3 des paliers 20 et 22 et entraîne en rotation, autour de son axe A1, une bielle 26 à l'extrémité libre de laquelle une manivelle 28 est articulée autour d'un axe parallèle A1.

La manivelle 28 est articulée à son autre extrémité à l'extrémité libre d'un maneton 30 qui commande en rotation alternée un arbre 32 d'entraînement central d'essuie-glace qui est guidé en rotation dans le palier central 20.

Le palier latéral gauche 22 serait susceptible de recevoir également un arbre d'entraînement d'essuie-glace mais il est ici utilisé uniquement pour la fixation de la poutre transversale 18 sur la caisse du véhicule.

En effet, le mécanisme d'essuyage représenté sur la figure 1, étant destiné à équiper une voiture à conduite à droite, est muni d'un palier latéral droit 34 d'axe A4 sensiblement parallèle aux axes A2 et A3 des paliers 20 et 22 et qui est disposé de façon sensiblement symétrique du palier latéral gauche 22 par rapport au palier central 20.

Le palier latéral droit 34 reçoit un arbre d'entraînement latéral 36 qui est commandé en rotation par une bielle transversale 38 qui est articulée à chacune de ses extrémités sur des leviers de commande 40,42 agencés radialement respectivement sur les arbres d'entraînement central 32 et latéral 36 des deux paliers central 20 et latéral droit 34.

Ainsi, le mouvement de balayage alterné imposé à l'arbre d'entraînement central 32 par le groupe motoréducteur 12 est répercuté simultanément sur l'arbre d'entraînement latéral 36.

On a représenté en traits mixtes la position de la bielle 38 dans le cas où le mécanisme d'essuyage 10 est destiné à équiper un véhicule à conduite à gauche. Il est alors possible de ne pas monter le palier latéral droit 34.

Afin de parfaire la rigidification du mécanisme d'essuyage, il est prévu une traverse de rigidification 44 qui relie les paliers central 20 et latéral droit 34.

Conformément aux enseignements de l'invention, la liaison de la traverse de rigidification 44 sur le palier central 20 est conçue de manière à pouvoir être assemblée après la pose des paliers sur le véhicule automobile.

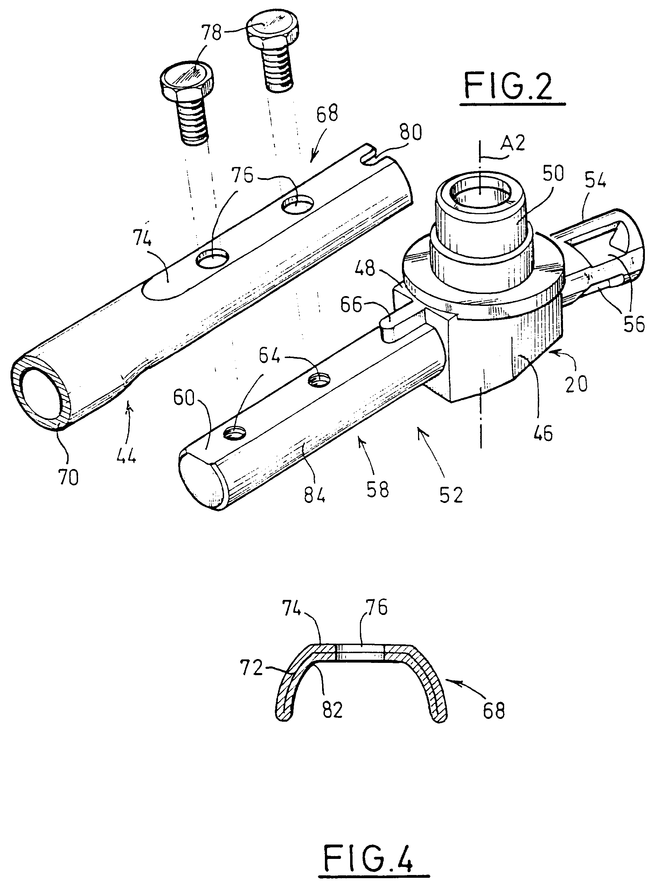

On a représenté sur la figure 2 de manière plus précise le palier central 20 avant son montage sur le véhicule automobile.

Le palier central 20 comporte essentiellement un corps principal 46 sur une face supérieure 48 duquel est fixée une douille de guidage en rotation 50 prévue pour recevoir à rotation l'arbre d'entraînement central 32.

Le corps principal 46 du palier central 20 comporte également deux moignons transversaux 52, 54 qui s'étendent sensiblement perpendiculairement à l'axe A2 de la douille de guidage en rotation 50, chacun dans une direction transversale opposée.

Le moignon transversal 54 est de conception connue et est prévu pour être reçu à l'intérieur d'une extrémité tubulaire creuse de la poutre transversale 18.

Il est tubulaire et il comporte par ailleurs des encoches 56 pour la fixation par sertissage de la poutre transversale 18.

Le moignon transversal 52 est conçu conformément à un mode de réalisation de l'invention et est constitué d'un cylindre 58 muni d'un méplat supérieur 60 dans lequel sont percés radialement deux trous taraudés 64, espacés axialement l'un de l'autre.

On a également aménagé sur le méplat 60 du moignon transversal 52 un ergot radial d'indexation et de détrompage 66.

On a représenté sur la figure 2 une extrémité de fixation 68 de la traverse de rigidification 44 qui est prévue pour coopérer avec le moignon transversal 52 du palier central 20 et qui est par ailleurs également représentée en section et en perspective sous un autre angle respectivement sur les figures 3 et 4.

La traverse tubulaire de rigidification 44 est constituée d'un tube 70 dont l'extrémité de fixation 68 est écrasée radialement de manière à présenter, en section, un profil en demi-cercle 72 muni d'un méplat supérieur 74 dont les dimensions sont telles que la surface intérieure concave 82 de l'extrémité de fixation est complémentaire de la surface extérieure convexe 84 du moignon 52 qu'elle vient recouvrir en position montée.

Le méplat 74 de l'extrémité de fixation 68 de la traverse de rigidification 44 comporte deux trous 76 pour le passage de deux vis 78 d'assemblage qui sont prévues pour être vissées dans les trous taraudés 64 du moignon transversal 52.

On a également aménagé dans le méplat 76 de l'extrémité de fixation 68 une encoche 80 destinée à coopérer avec l'ergot de détrompage et d'indexation 66 du moignon transversal 52.

Cette disposition constructive permet notamment d'assurer une parfaite coïncidence au montage des trous 76 de la traverse de rigidification 44 avec les trous taraudés 64 du moignon transversal 52 afin de faciliter l'introduction des vis d'assemblage 78.

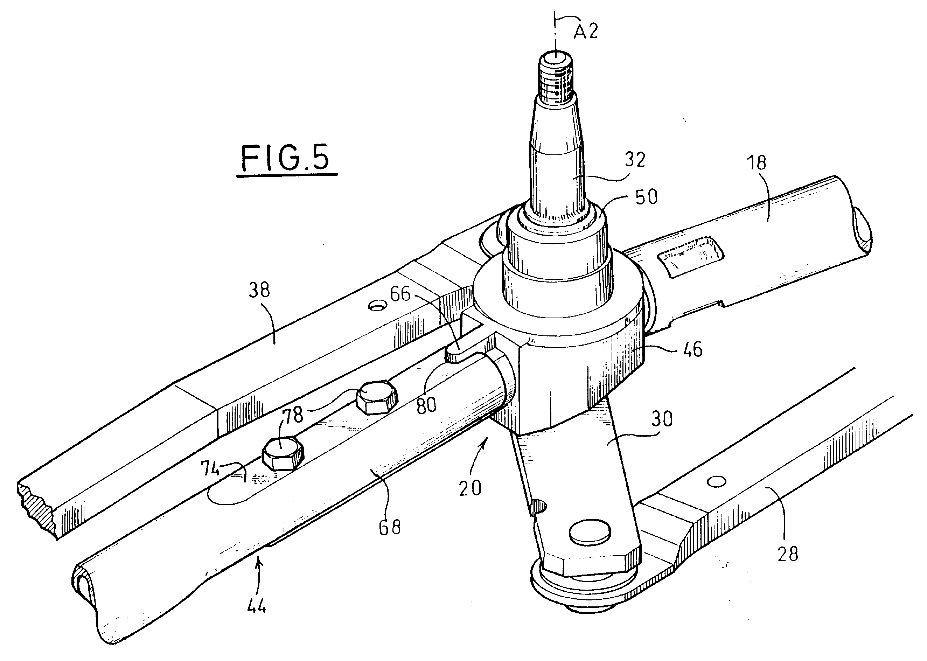

On a représenté sur la figure 5 le palier central 20 après l'assemblage complet de tous les éléments composant le mécanisme d'essuyage 10.

Si dans l'exemple représenté, le palier central 20 comprend un moignon transversal 54 réalisé selon une technique connue de l'état de la technique, ce moignon peut de la même manière être réalisé conformément aux enseignements de l'invention pour permettre une standardisation encore plus grande des composants.

De même, la fixation de la traverse de rigidification 44 sur le palier latéral droit 34 est susceptible d'être réalisée suivant la technique de l'invention.

## Revendications

1. Mécanisme d'essuie-glace pour véhicule automobile, du type comportant au moins un palier qui est prévu pour le guidage en rotation d'un arbre d'entraînement (32) en balayage alterné d'un essuie-glace et qui comporte un moignon transversal (52) sensiblement cylindrique pour la fixation d'un élément de structure (44) du mécanisme (10),
caractérisé en ce que l'élément de structure comporte une extrémité de fixation (68) qui présente, en section, un profil en demi-cercle (72) de sorte que l'élément de structure (44) puisse être monté sur le moignon transversal (52) du palier (20) selon une direction radiale après la mise en place du palier (20) sur le véhicule et de sorte que la surface intérieure concave (82) de l'extrémité de fixation (68) soit complémentaire de la surface extérieure convexe (84) du moignon transversal (52) qu'elle vient recouvrir en position montée, et en ce qu'il est prévu des éléments de fixation (78) démontables.

2. Mécanisme selon la revendication 1, caractérisé en ce que le moignon transversal (52) du palier (20) et l'extrémité libre (68) de fixation de l'élément de structure (44) sur le moignon (52) présentent des profils complémentaires (82, 84) pour assurer l'accouplement en rotation de ces deux composants.

3. Mécanisme selon la revendication 2, caractérisé en ce que le moignon transversal (52) du palier (20) comporte un méplat supérieur (60), et en ce que l'élément de structure (44) présente, en section, un profil en demi-cercle (72) muni d'un méplat (74).

4. Mécanisme selon la revendication 3, caractérisé en ce que l'élément de structure (44) est un tube (70) dont l'extrémité de fixation (68) au palier (20) est écrasée radialement

5. Mécanisme selon l'une des revendications 3 ou 4, caractérisé en ce que l'extrémité de fixation (68) de l'élément de structure (44) est fixée sur le moignon (52) par des vis radiales (76) dont la tête prend appui sur le méplat (74) de la surface extérieure convexe de l'extrémité de fixation (68) et dont le corps est vissé radialement dans le moignon (52).

6. Mécanisme selon la revendication 5, caractérisé en ce que le méplat (60) du moignon transversal (52) comporte un ergot (66) orienté radialement et qui est reçu dans une encoche correspondante (80) de l'extrémité de fixation (68) de l'élément de structure (44) pour indexer angulairement l'élément de structure (44) par rapport au palier (20).

7. Mécanisme d'essuie-glace de véhicule automobile, du type comportant une poutre transversale principale (18) sur laquelle est agencée un groupe motoréducteur (12) pour l'entraînement en balayage alterné d'un arbre d'entraînement (32) d'un premier essuie-glace monté à rotation dans un palier central (20), comportant un premier palier latéral (22) de guidage d'un second arbre d'entraînement d'un second essuie-glace, du type dans lequel les deux paliers (20, 22) servent à la fixation de la poutre transversale (18), du type comportant un second palier latéral (34) susceptible de recevoir le second arbre d'entraînement et correspondant à une seconde position du second essuie-glace, caractérisé en ce que le second palier latéral (34) est relié au palier central (20) par une traverse de rigidification (44) et en ce que la fixation de la traverse (44) sur au moins l'un des paliers (20, 34) est réalisée selon l'une quelconque des revendications précédentes.

## Claims

1. A screen wiper mechanism for a motor vehicle, of the type including at least one bearing which is arranged to guide a drive spindle (32) in rotation to give to-and-fro Wiping movement of a screen wiper, and which includes a substantially cylindrical transverse stub member (52) for the fastening of a structural element (44) of the mechanism (10),
characterised in that the structural element includes a fastening end portion (68) which has in cross section a semicircular profile (72) such that the structural element (44) is able to be mounted on the transverse stub member (52) of the bearing (20) in a radial direction after the bearing (20) has been fitted on the vehicle, and such that the concave internal surface (82) of the fastening end portion (68) is complementary to the convex external surface (84) of the transverse stub member (52), which it overlies in the fitted position, and in that releasable fastening elements (78) are provided.

2. A mechanism according to Claim 1, characterised in that the transverse stub member of the bearing (20), and the free end portion (68) for fastening the structural element (44) on the stub member (52), have complementary profiles (82, 84) for coupling the said two components together in rotation.

3. A mechanism according to Claim 2, characterised in that the transverse stub member (52) of the bearing (20) has a flat surface portion (60) at the top, and in that the structural element (44) has in cross section a semicircular profile (72) which includes a flat portion (74).

4. A mechanism according to Claim 3, characterised in that the structural element (44) is a tube (70), the end portion (68) of which, for fastening to the bearing (20), is closed up radially.

5. A mechanism according to Claim 3 or Claim 4, characterised in that the fastening end portion (68) of the structural element (44) is fixed on the stub member (52) by means of radial screws (76), the heads of which bear on the flat portion (74) of the convex external surface of the fastening end portion (68), with their bodies being screwed radially into the stub member (52).

6. A mechanism according to Claim 5, characterised in that the flat surface portion (60) of the transverse stub member (52) includes a key element (66) which is orientated radially and which is received in a corresponding notch (80) of the fastening end portion (68) of the structural element (44), so as to afford angular indexing of the structural element (44) with respect to the bearing (20).

7. A motor vehicle screen wiper mechanism, of the type including a transverse main support (18), on which there is arranged a speed reducing drive unit (12) for driving in to-and-fro motion a drive spindle (32) of a first screen wiper mounted for rotation in a central bearing (20), the mechanism including a lateral first bearing (22) for guiding a second drive spindle of a second screen wiper, being of the type in which the two bearings (20, 22) serve for the fastening of the transverse main support (18), and being of the type that includes a lateral second bearing (34) which is arranged for receiving the second drive spindle and which corresponds to a second position of the second screen wiper, characterised in that the lateral second bearing (34) is connected to the central bearing (20) through a transverse stiffener (44), and in that the transverse stiffener (44) is fastened on at least one of the bearings (20, 34) in a manner according to any one of the preceding Claims.

## Patentansprüche

1. Scheibenwischermechanismus für Kraftfahrzeuge, umfassend wenigstens ein Lager, das zur Drehführung einer Antriebswelle (32) für den Pendelwischantrieb eines Scheibenwischers vorgesehen ist und das einen in etwa zylindrischen Querstumpf (52) für die Befestigung eines Strukturelements (44) des Mechanismus (10) umfaßt,
**dadurch gekennzeichnet,** daß das Strukturelement ein Befestigungsende (68) umfaßt, das im Schnitt ein Halbkreisprofil (72) aufweist, so daß das Strukturelement (44) am Querstumpf (52) des Lagers (20) entlang einer radialen Richtung nach dem Einbau des Lagers (20) am Fahrzeug angebracht werden kann und so daß die konkave Innenfläche (82) des Befestigungsendes (68) formschlüssig mit der konvexen Außenfläche (84) des Querstumpfes (52) ausgeführt ist, die sie in Einbauposition bedeckt, und daß demontierbare Befestigungselemente (78) vorgesehen sind.

2. Mechanismus nach Anspruch 1, **dadurch gekennzeichnet,** daß der Querstumpf (52) des Lagers (20) und das freie Ende (68) zur Befestigung des Strukturelements (44) am Stumpf (52) formschlüssige Profile (82, 84) aufweisen, um die drehfeste Verbindung dieser beiden Bauteile herbeizuführen.

3. Mechanismus nach Anspruch 2, **dadurch gekennzeichnet,** daß der Querstumpf (52) des Lagers (20) eine obere Abflachung (60) umfaßt und daß das Strukturelement (44) im Schnitt ein Halbkreisprofil (72) mit einer Abflachung (74) aufweist.

4. Mechanismus nach Anspruch 3, **dadurch gekennzeichnet,** daß das Strukturelement (44) ein Rohr (70) ist, dessen Befestigungsende (68) zur Befestigung am Lager (20) radial flachgedrückt ist.

5. Mechanismus nach einem der Ansprüche 3 oder 4, **dadurch gekennzeichnet,** daß das Befestigungsende (68) des Strukturelements (44) am Stumpf (52) durch radiale Schrauben (76) befestigt ist, deren Kopf auf der Abflachung (74) der konvexen Außenfläche des Befestigungsendes (68) zur Auflage kommt und deren Körper radial in den Stumpf (52) eingeschraubt wird.

6. Mechanismus nach Anspruch 5, **dadurch gekennzeichnet,** daß die Abflachung (60) des Querstumpfes (52) eine radial ausgerichtete Nase (66) umfaßt, die in eine entsprechende Ausnehmung (80) des Befestigungsendes (68) des Strukturelements (44) eingesetzt ist, um das Strukturelement (44) im Verhältnis zum Lager (20) winklig vorzupositionieren.

7. Scheibenwischermechanismus für Kraftfahrzeuge, umfassend einen Hauptquerträger (18), auf dem eine Wischerantriebseinheit (12) für den Pendelwischantrieb einer Antriebswelle (32) eines ersten Scheibenwischers angeordnet ist, die drehbar in einem mittleren Lager (20) gelagert ist, mit einem ersten seitlichen Lager (22) zur Führung einer zweiten Antriebswelle eines zweiten Scheibenwischers, wobei die zwei Lager (20, 22) zur Befestigung des Querträgers (18) dienen, mit einem zweiten seitlichen Lager (34), das die zweite Antriebswelle aufnehmen kann und einer zweiten Position des zweiten Scheibenwischers entspricht, **dadurch gekennzeichnet,** daß das zweite seitliche Lager (34) mit dem mittleren Lager (20) durch eine Versteifungstraverse (44) verbunden ist und daß die Befestigung der Traverse (44) an wenigstens einem der Lager (20, 34) nach einem der vorangehenden Ansprüche ausgeführt ist.
